# EUROPÄISCHE PATENTSCHRIFT

(11) **EP 3 620 043 B1**
(45) Veröffentlichungstag und Bekanntmachung des Hinweises auf die Patenterteilung: **05.05.2021**
(21) Anmeldenummer: 19195377.7
(22) Anmeldetag: 04.09.2019
(51) Int. Cl.: A01D 78/10

(54) **HEUWERBUNGSMASCHINE, INSBESONDERE KREISELSCHWADER**
HAYMAKING MACHINE, IN PARTICULAR ROTARY WINDROWER
MACHINE DE FENAISON, EN PARTICULIER ANDAINEUSE ROTATIVE

(30) Priorität: 07.09.2018 DE 102018121931
(43) Veröffentlichungstag der Anmeldung: 11.03.2020
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-A1- 3 092 888
- EP-A1- 3 095 316
- DE-A1- 19 953 693
- DE-A1-102005 013 054
- DE-U1-202007 001 281
- US-A1- 2013 312 383

## Beschreibung

Die Erfindung betrifft eine Heuwerbungsmaschine, insbesondere einen Kreiselschwader, nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt. Bei der erfindungsgemäßen Heuwerbungsmaschine handelt es sich insbesondere um einen Kreiselschwader.

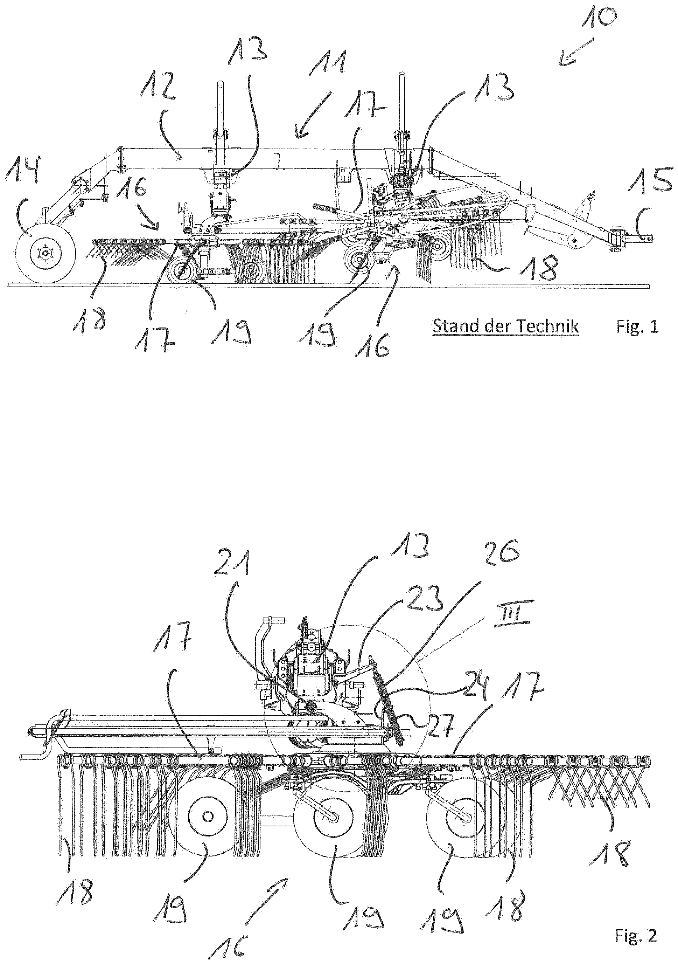

Fig. 1 zeigt den bekannten Aufbau einer als Seitenkreiselschwader ausgebildeten Heuwerbungsmaschine 10. Die Heuwerbungsmaschine 10 verfügt über ein Grundgestell 11 aus einem Längsholm 12 sowie Auslegerarmen 13. Die Heuwerbungsmaschine 10 ist über Stützräder 14, die am Grundgestell 11 angreifen, auf einem zu bearbeitenden Untergrund abstützbar, wobei die Heuwerbungsmaschine 10 über eine Zugdeichsel 15 an ein Zugfahrzeug ankoppelbar ist. Die als Seitenkreiselschwader ausgebildete Heuwerbungsmaschine 10 der Fig. 1 verfügt über Rechkreisel 16. Jeder Rechkreisel 16 ist an einem Auslegerarm 13 der Heuwerbungsmaschine 10 gelagert.

Jeder Rechkreisel 16 der Heuwerbungsmaschine 10 ist um eine Kreiselachse umlaufend antreibbar und verfügt über Zinkenarme 17 mit Rechzinken 18. Die in Fig. 1 gezeigte Heuwerbungsmaschine 10 verfügt über zwei Rechkreisel 16, wobei ein erster Rechkreisel an einer ersten Seite des Längsholms 12 und ein zweiter Rechkreisel 16 an einer zweiten, gegenüberliegenden Seite des Längsholms 12 positioniert ist. In Fig. 1 ist der hintere Rechkreisel 16 in Arbeitsstellung gezeigt, wohingegen der vordere Rechkreisel 16 aus einer Arbeitsstellung herausgehoben ist. In der Arbeitsstellung ist der jeweilige Rechkreisel 16 über Tast- und Stützräder 19 auf dem zu bearbeitenden Untergrund abstützbar. Dann, wenn der jeweilige Rechkreisel 16 aus seiner Arbeitsstellung herausgehoben ist, sind die Tast- und Stützräder 19 des jeweiligen Rechkreisels 16 vom zu bearbeitenden Untergrund abgehoben.

Eine als Seitenkreiselschwader ausgebildete Heuwerbungsmaschine 10 mit dem in Fig. 1 gezeigten Aufbau ist aus der DE 20 2007 001 281 U1 bekannt.

Wie oben ausgeführt, ist jeder Rechkreisel 16 der Heuwerbungsmaschine an einem Auslegerarm 13 der Heuwerbungsmaschine 10 gelagert. So ist es sind aus der DE 20 2007 001 281 U1 bekannt, dass der jeweilige Rechkreisel derart am jeweiligen Auslegerarm gelagert ist, dass der jeweilige Rechkreisel über einen Führungsschlitten relativ zum jeweiligen Auslegerarm translatorisch verlagerbar ist.

Ferner ist es bekannt, dass der jeweilige Rechkreisel der Heuwerbungsmaschine gegenüber dem Führungsschlitten rotatorisch verlagerbar ist, und zwar um zwei senkrecht zu aufeinander verlaufende Achsen. Eine erste Achse erstreckt sich dabei parallel zum Längsholm in horizontaler Richtung, eine zweite Achse erstreckt sich senkrecht hierzu ebenfalls in horizontaler Richtung. Durch diese sogenannte kardanische Aufhängung kann ein Rechkreisel Roll- und Nickbewegungen um diese Achsen herum ausführen und bodenkopierend dem Geländeverlauf folgen, insbesondere an Kuppen und Senken.

Ferner ist es bekannt, dass der jeweilige Rechkreisel der Heuwerbungsmaschine zusammen mit dem jeweiligen Auslegerarm relativ zum Längsholm schwenkbar ist, um die Heuwerbungsmaschine zwischen einer Arbeitsstellung und einer Transportstellung zu überführen.

Die - durch die kardanische Aufhängung ermöglichten - Schwenkbewegungen bzw. Kippbewegungen des jeweiligen Rechkreisels relativ zum jeweiligen Führungsschlitten, über welchen der jeweilige Rechkreisel relativ zum jeweiligen Auslegerarm translatorisch verlagerbar ist, ist sowohl in der Arbeitsstellung als auch in der Transportstellung möglich und nach dem Stand der Technik durch mechanische Anschläge begrenzt. Derartige mechanische Anschläge unterliegen einem Verschleiß. Im Falle eines Verschleißes derselben ist eine Relativbewegung, welche der jeweilige Rechkreisel relativ zum jeweiligen Führungsschlitten insbesondere in der Transportstellung der Heuwerbungsmaschine ausführen kann, zu groß.

Hiervon ausgehend liegt der vorliegenden Erfindung die Aufgabe zugrunde, eine neuartige Heuwerbungsmaschine zu schaffen.

Diese Aufgabe wird durch eine Heuwerbungsmaschine nach Anspruch 1 gelöst.

Erfindungsgemäß greift an dem Führungsschlitten des jeweiligen Rechkreisels ein erster Haltebügel an.

Erfindungsgemäß greift an dem jeweiligen Rechkreisel ein zweiter Haltebügel an.

Erfindungsgemäß erstreckt sich durch diese Haltebügel eine Stange.

Erfindungsgemäß sind an der jeweiligen Stange eine erste Feder und eine zweite Feder geführt, wobei die erste Feder an einer ersten Seite des zweiten Haltebügels dem ersten Haltebügel zugewandt angeordnet ist, und wobei die zweite Feder an einer zweiten Seite des zweiten Haltebügels vom ersten Haltebügel abgewendet angeordnet ist.

Bei der erfindungsgemäßen Heuwerbungsmaschine wird der jeweilige Rechkreisel zwischen den Federn in einer vorgegebenen Position gehalten. Die Bewegungen des Rechkreisels, insbesondere zur Bodenanpassung, erfolgen gegen die resultierende Kraft der beiden zusammenwirkenden Federn. Die maximale Auslenkung des Rechkreisels wird erreicht, wenn die Windungen der jeweils zusammengedrückten Feder auf Block sitzen. Da die Federkraft bis zu diesem Punkt jedoch kontinuierlich ansteigt, stößt der Rechkreisel nicht schlagartig, sondern sanft an diesen Anschlag an. Die im Betrieb auf den Ausleger einwirkenden Belastungen werden dadurch vorteilhaft reduziert. Beim Übergang von der Vorgewendestellung in die Arbeitsstellung kann der jeweilige Rechkreisel schneller mit geringerer Belastung auf dem zu bearbeitenden Untergrund abgesetzt werden.

Diese Lagerung des jeweiligen Rechkreisels am jeweiligen Führungsschlitten über die Federn hat in der Transportstellung den Vorteil, dass sich der Rechkreisel in seiner hochgeklappten Stellung nicht frei zwischen den Anschlägen bewegen kann, sondern durch die Federn in einer vorgegebenen Zwischenposition gehalten wird. Die bei Transportfahrten dynamisch auftretenden Flieh- oder Querkräfte können einen erfindungsgemäßen Rechkreisel daher nicht schlagartig von einem Anschlag zum anderen bewegen. Dadurch werden die auf den Ausleger sowie auf die Heuwerbungsmaschine einwirkenden Belastungen vorteilhaft reduziert.

Nach einer Weiterbildung der Erfindung handelt es sich bei der ersten Feder und bei der zweiten Feder jeweils um eine Druckfeder. Dies ist besonders bevorzugt, um in der Transportstellung eine Relativbewegung zwischen jeweiligen Rechkreisel und jeweiligem Führungsschlitten so gering wie möglich zu halten sowie in der Arbeitsstellung und Vorgewendestellung Belastungen, die auf die Heuwerbungsmaschine einwirken, zu dämpfen und so gering wie möglich zu halten.

Nach einer Weiterbildung der Erfindung stützt sich die erste Feder auf einem ersten, dem zweiten Haltebügel zugewandten Federteller und einem zweiten, von dem zweiten Haltebügel abgewandten Federteller ab. Die zweite Feder stützt sich auf einem dritten, dem zweiten Haltebügel zugewandten Federteller und einem vierten, von dem zweiten Haltebügel abgewandten Federteller ab. Die Federn werden von der als Gewindestange ausgebildeten Stange durchdrungen und der zweite und der vierte Federteller werden durch Muttern an der Gewindestange abgestützt. Durch die Einschraublänge der beiden Muttern kann der Abstand zwischen dem zweiten und vierten Federteller verändert werden, wodurch die Vorspannung der Federn beeinflusst werden kann. Je nachdem, ob die eine oder die andere Mutter weiter eingeschraubt wird, kann auch die Grundposition des jeweiligen Rechkreisels verändert werden.

Die Grundposition ist dabei die Position, die der Rechkreisel relativ zum Führungsschlitten einnimmt, wenn er vom Boden abgehobenen ist.

Nach einer Weiterbildung der Erfindung ist ein Abschnitt der Gewindestange, der sich durch den ersten Haltebügel hindurch erstreckt, an dem erster Haltebügel über Muttern fixiert, die an gegenüberliegende Seiten des ersten Haltebügels angeordnet sind. Über die am ersten Haltebügel angreifenden Muttern kann eine Grundstellung des jeweiligen Rechkreisels, die derselbe insbesondere in der Vorgewendestellung einnimmt, eingestellt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht einer aus dem Stand der Technik bekannten, als Kreiselschwader ausgebildeten Heuwerbungsmaschine mit einem aus der Arbeitsstellung herausgehobenen Rechkreisel;
- Fig. 2: ein Detail einer erfindungsgemäßen, als Kreiselschwader ausgebildeten Heuwerbungsmaschine;
- Fig. 3: das Detail III der Fig. 1;
- Fig. 4: das Detail III in perspektivischer Ansicht;
- Fig. 5: ausschnittsweise eine weitere Ausführungsform einer erfindungsgemäßen Heuwerbungsmaschine.

Die hier vorliegende Erfindung betrifft eine Heuwerbungsmaschine. Besonders bevorzugt kommt die Erfindung bei einer als Kreiselschwader ausgebildeten Heuwerbungsmaschine zum Einsatz. Die Erfindung ist jedoch nicht auf den Einsatz bei Kreiselschwadern begrenzt. Vielmehr kann die Erfindung auch bei anderen Heuwerbungsmaschinen zum Einsatz kommen.

Der grundsätzliche Aufbau einer Heuwerbungsmaschine wurde bereits unter Bezugnahme auf Fig. 1 beschrieben. So verfügt eine Heuwerbungsmaschine über ein Grundgestell 11, welches einen Längsholm 12 sowie Auslegerarme 13 umfasst.

Fig. 2, 3 und 4 zeigen jeweils einen Ausschnitt aus einer erfindungsgemäßen Heuwerbungsmaschine im Bereich eines Rechkreisels 16, der an einem Auslegerarm 13 eines Grundgestells der Heuwerbungsmaschine gelagert ist.

Ein solcher Rechkreisel 16 ist um eine Kreiselachse umlaufend antreibbar und verfügt über Zinkenarme 17 mit Rechzinken 18. In der Arbeitsstellung stützt sich der jeweilige Rechkreisel 16 über Tast- und Stützräder 19 auf einem zu bearbeitenden Untergrund ab.

Der jeweilige Rechkreisel 16 der Heuwerbungsmaschine 10 ist am jeweiligen Führungsschlitten 20 gelagert, wobei der jeweilige Rechkreisel 16 relativ zum jeweiligen Auslegerarm 13 über einen Führungsschlitten 20 translatorisch verlagerbar ist, um den jeweiligen Rechkreisel 16 quer zur Längsrichtung des Längsholms 12 des Grundgestells 11 weiter einzufahren und auszufahren.

Der jeweilige Rechkreisel 16 der Heuwerbungsmaschine 10 ist zusätzlich gegenüber dem jeweiligen Führungsschlitten 20 rotatorisch verlagerbar, vorzugsweise um zwei Schwenkachsen 21, 22. Eine erste Schwenkachse 21 erstreckt sich dabei in Arbeitsstellung der Heuwerbungsmaschine horizontal und parallel zum Führungsarm 13. Eine zweite Schwenkachse 22 erstreckt sich in der Arbeitsstellung der Heuwerbungsmaschine 10 senkrecht hierzu ebenfalls horizontal jedoch parallel zum Längsholm 12.

An dem jeweiligen Führungsschlitten 20 des jeweiligen Rechkreisels 16 greift ein erster Haltebügel 23 an. Ein zweiter Haltebügel 24 greift am jeweiligen Rechkreisel 16 an. Durch die beiden Haltebügel 23, 24 erstreckt eine Stange 25, nämlich durch vom jeweiligen Führungsschlitten 20 bzw. von dem jeweiligen Rechkreisel 16 abgewandte, freie Enden des jeweiligen Haltebügels 23, 24. An der jeweiligen Stange 25 sind eine erste Feder 26 und eine zweite Feder 27 geführt. Die erste Feder 26 ist an einer ersten Seite des zweiten Haltebügels 24 dem ersten Haltebügel 23 zugewandt angeordnet. Die zweite Feder 27 ist an einer zweiten Seite des zweiten Haltebügels 24 vom ersten Haltebügel 23 abgewandt angeordnet.

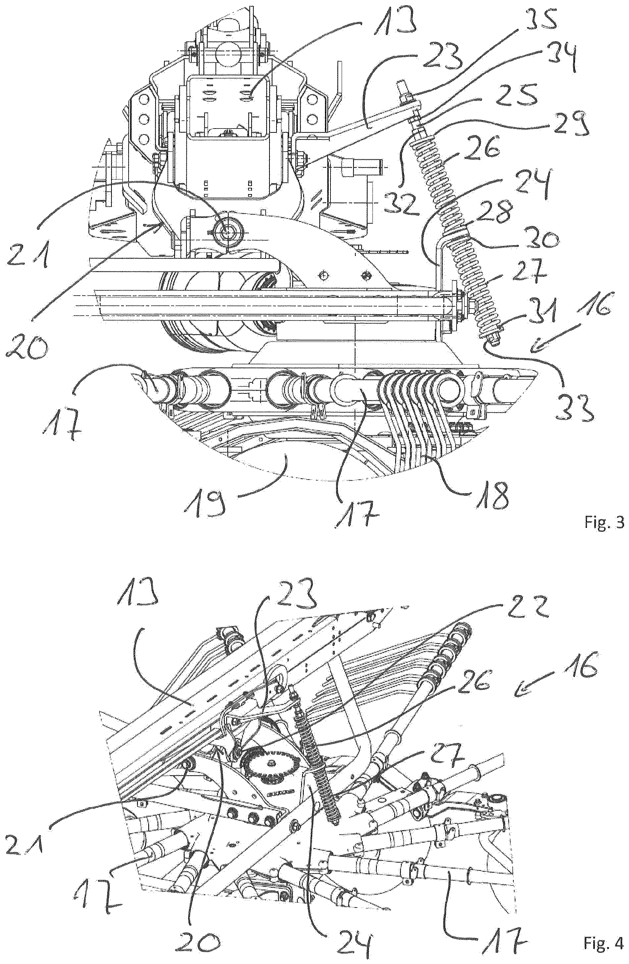

Dann, wenn sich der Kreiselschwader 16 in Fig. 3 um die aus der Zeichenebene heraus erstreckende erste Schwenkachse 21 entgegen dem Uhrzeigersinn rotatorisch verlagern soll, wirkt die erste Feder 26 dieser Schwenkbewegung entgegen und dämpft dieselbe.

Soll hingegen der jeweilige Rechkreisel 16 um die Achse 21 in einer entgegengesetzten Richtung im Uhrzeigersinn verlagert werden, so wirkt die zweite Feder 27 dieser Bewegung entgegen und dämpft dieselbe. Bei den beiden Federn 26 und 27 handelt es sich dabei um Druckfedern.

Die erste Feder 26 sowie die zweite Feder 27 stützen sich an beiden Enden an Federtellern ab. So stützt sich die erste Feder 26 auf einem, dem zweiten Haltebügel 24 zugewandten ersten Federteller 28 und auf einem von dem zweiten Haltebügel 24 abgewandten zweiten Federteller 29 ab. Die zweite Feder 27 stützt sich auf einem dem zweiten Haltebügel 24 zugewandten dritten Federteller 30 sowie an einem vom zweiten Haltebügel 24 abgewandten vierten Federteller 31 ab. Die erste Feder 26 sowie die zweite Feder 27 sind dabei an der Stange 25 jeweils vorgespannt, und zwar dadurch, dass die erste Feder 26 über eine mit der als Gewindestange ausgebildeten Stange 25 zusammenwirkende erste Mutter 32 verspannt ist, die am zweiten Federteller 29 angreift, wohingegen die zweite Feder 27 über eine mit der als Gewindestange ausgebildeten Stange 25 zusammenwirkende zweite Mutter 33 verspannt ist, die am vierten Federteller 31 angreift. Somit sind die Federn 26, 27 zwischen den Federtellern 29, 31, welche von den jeweiligen Muttern 32, 33 gehalten werden, verspannt. Über den Abstand zwischen dem zweiten Federteller 29 und dem vierten Federteller 31 kann die Vorspannung der Federn 26, 27 verändert werden. Dieser Abstand kann über die Einschraubpositionen der Muttern 32, 33 an der Stange 25 verändert werden.

Wie oben bereits ausgeführt, erstreckt sich die Stange 25, an welcher die beiden Druckfedern 26 und 27 angeordnet sind, sowohl durch den zweiten Haltebügel 24 als auch durch den ersten Haltebügel 23. Die Stange 25 erstreckt sich verschiebbar durch eine Ausnehmung im zweiten Haltebügel 24 hindurch. Derjenige Abschnitt der Stange 25, der sich durch den ersten Haltebügel 23 hindurch erstreckt, ist am ersten Haltebügel 23 fixiert, und zwar über Muttern 34, 35, die an gegenüberliegenden Seiten des ersten Haltebügels 23 angeordnet sind bzw. angreifen. Nach Lösen dieser Muttern 34, 35 kann eine Grundstellung des jeweiligen Rechkreisels 16, die derselbe insbesondere in der Vorgewendestellung einnimmt, eingestellt werden.

Die als Druckfedern ausgebildeten Federn 26, 27 können nicht nur die Bewegung des Rechkreisels 16 um die Achse 21 abstützen, sondern auch eine rotatorische Schwenkbewegung des Rechkreisels 16 um die Achse 22. Durch die beiden Druckfedern 26, 27, die eine Doppelfeder-Anordnung bereitstellen, können insbesondere in der Arbeitsstellung auf den Rechkreisel 16 einwirkende Kräfte gedämpft werden. In der Transportstellung wird eine Schwenkbewegung, die der Rechkreisel 16 relativ zum Führungsschlitten 20 ausführen kann, beschränkt. Die Lagerung des Rechkreisels 16 am jeweiligen Führungsschlitten 20 über die Doppelfederanordnung aus den beiden Druckfedern 26, 27 weist demnach sowohl in der Arbeitsstellung als auch in der Transportstellung der Heuwerbungsmaschine Vorteile auf.

Zwischen dem ersten Federteller 28 und dem zweiten Haltebügel 24 sowie zwischen dritten Federteller 30 und dem zweiten Haltebügel 24 kann auf beiden Seiten des zweiten Haltebügels 24, nämlich des Abschnitts des zweiten Haltebügels 24, durch welchen sich die Stange 25 hindurch erstreckt, jeweils ein balliges oder gewölbtes Lagerelement (nicht gezeigt) positioniert sein, welches eine Kippbewegung zwischen der Stange 25, den Federn 26, 27 und dem zweiten Haltebügel 24 zulässt.

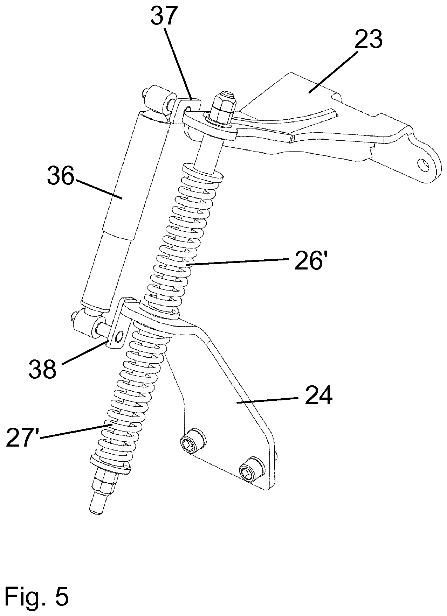

Die Fig. 5 zeigt ausschnittsweise eine weitere Ausführungsform einer erfindungsgemäßen Heuwerbungsmaschine, bei welcher parallel zu den Federn 26', 27' ein Stoßdämpfer 36 angeordnet ist. Dazu sind an den Haltebügeln 23, 24 Halterungen 37, 38 angeordnet, an welchen die Gelenke des Stoßdämpfers 36 befestigt sind. Selbstverständlich ist es auch möglich, andere Befestigungsmöglichkeiten für den Stoßdämpfer 36 vorzusehen. Die nicht mit Bezugszeichen versehenen Bauteile entsprechen den jeweiligen Bauteilen der anderen Ausführungsbeispiele bzw. anderen Figuren.

Der Stoßdämpfer 36 kann dafür vorgesehen werden, eventuell auftretende Schwingungen zu verringern und/oder zum Stillstand zu bringen. Dazu kann der Stoßdämpfer 36 in entsprechend geeigneten Bauformen ausgeführt werden.

Die Federn 26, 27, 26', 27' können alternativ als Gasdruckfedern ausgeführt werden, bei welchen die Federkraft durch unter Hochdruck stehendes Gas erzeugt wird. Gasdruckfedern benötigen vorteilhafterweise einen kleineren Bauraum und in eine Gasdruckfeder kann vorteilhaft ein Dämpfungsmechanismus integriert werden. Selbstverständlich können auch andere geeignete Federbauformen vorgesehen werden.

Es ist möglich beide Federn 26, 27, 26', 27' oder aber auch nur eine der Federn 26, 27, 26', 27' als Gasdruckfeder bzw. in einer anderen geeigneten Federbauform auszuführen.

### Bezugszeichenliste

- 10: Heuwerbungsmaschine
- 11: Grundgestell
- 12: Längsholm
- 13: Auslegerarm
- 14: Stützrad
- 15: Zugdeichsel
- 16: Rechkreisel
- 17: Zinkenarm
- 18: Rechzinken
- 19: Tast- und Stützrad
- 20: Führungsschlitten
- 21: Achse
- 22: Achse
- 23: Haltebügel
- 24: Haltebügel
- 25: Stange
- 26,26': Feder
- 27,27': Feder
- 28: Federteller
- 29: Federteller
- 30: Federteller
- 31: Federteller
- 32: Mutter
- 33: Mutter
- 34: Mutter
- 35: Mutter
- 36: Stoßdämpfer
- 37: Halterung
- 38: Halterung

## Patentansprüche

1. Heuwerbungsmaschine (10), insbesondere Kreiselschwader,
mit einem einen Längsholm (12) sowie Auslegerarme (13) umfassenden Grundgestell (11), das über Stützräder (14) auf einem zu bearbeitenden Untergrund abstützbar ist und über das die Heuwerbungsmaschine an ein Zugfahrzeug ankoppelbar ist,
mit mindestens einem um eine Kreiselachse umlaufend angetriebenen Rechkreisel (16), welcher Zinkenarme (17) mit Rechzinken (18) aufweist,
wobei der jeweilige Rechkreisel (16) an dem jeweiligen Auslegerarm (13) des Grundgestells (11) derart gelagert ist, dass der jeweilige Rechkreisel (16) über einen Führungsschlitten (20) relativ zum jeweiligen Auslegerarm (13) translatorisch und gegenüber dem Führungsschlitten (20) rotatorisch verlagerbar ist, **dadurch gekennzeichnet, dass**
an dem Führungsschlitten (20) des jeweiligen Rechkreisels (16) ein erster Haltebügel (23) angreift,
an dem jeweiligen Rechkreisel (16) ein zweiter Haltebügel (24) angreift,
sich durch diese Haltebügel (23, 24) eine Stange (25) erstreckt,
an der jeweiligen Stange (25) eine erste Feder (26) und eine zweite Feder (27) geführt sind,
die erste Feder (26) an einer ersten Seite des zweiten Haltebügels (24) dem ersten Haltebügel (23) zugewandt angeordnet ist,
die zweite Feder (27) an einer zweiten Seite des zweiten Haltebügels (24) vom ersten Haltebügel (23) abgewendet angeordnet ist.

2. Heuwerbungsmaschine nach Anspruch 1, **dadurch gekennzeichnet, dass** es sich bei der ersten Feder (26) und bei der zweiten Feder (27) jeweils um eine Druckfeder handelt.

3. Heuwerbungsmaschine nach Anspruch 1 oder 2, **dadurch gekennzeichnet, dass** die erste Feder (26) sich auf einem ersten, dem zweiten Haltebügel (24) zugewandten Federteller (28) und einem zweiten, von dem zweiten Haltebügel (24) abgewandten Federteller (29) abstützt.

4. Heuwerbungsmaschine nach einem der Ansprüche 1 bis 3, **dadurch gekennzeichnet, dass** die zweite Feder (27) sich auf einem dritten, dem zweiten Haltebügel (24) zugewandten Federteller (30) und einem vierten, von dem zweiten Haltebügel (24) abgewandten Federteller (31) abstützt.

5. Heuwerbungsmaschine nach Anspruch 4, **dadurch gekennzeichnet, dass** die erste Feder (26) und die zweite Feder (27) über eine erste Mutter (32) und/oder über eine zweite Mutter (33), die mit der als Gewindestange ausgebildeten Stange (25) zusammenwirken vorspannbar ist.

6. Heuwerbungsmaschine nach einem der Ansprüche 1 bis 5, **dadurch gekennzeichnet, dass** ein Abschnitt der Stange (25), der sich durch den ersten Haltebügel (23) hindurch erstreckt, an dem ersten Haltebügel (23) fixiert ist.

7. Heuwerbungsmaschine nach Anspruch 6, **dadurch gekennzeichnet, dass** der Abschnitt der Stange (25), der sich durch den ersten Haltebügel (23) hindurch erstreckt, an dem ersten Haltebügel (23) über Muttern (34, 35) fixiert ist, die an gegenüberliegende Seiten des ersten Haltebügels (23) angeordnet sind.

8. Heuwerbungsmaschine nach einem der vorangehenden Ansprüche, **dadurch gekennzeichnet, dass** die Federn (26, 27) als Druckfeder und/oder als Gasdruckfeder ausgeführt sind.

9. Heuwerbungsmaschine nach einem der vorangehenden Ansprüche, **dadurch gekennzeichnet, dass** parallel zu den Federn (26, 27, 26', 27') ein Stoßdämpfer (36) angeordnet ist.

## Claims

1. Haymaking machine (10), in particular rotary rake, having a base frame (11) which comprises a longitudinal side rail (12) and extension arms (13) and which is able to be supported on an underlying surface to be worked on via supporting wheels (14), and via which the haymaking machine is able to be coupled to a towing vehicle, having at least one rake rotor (16) which is driven in rotation about a rotor axis and has tine arms (17) with rake tines (18),
wherein each respective rake rotor (16) is mounted on each respective extension arm (13) of the base frame (11) such that the respective rake rotor (16) is able to be displaced in translation relative to the respective extension arm (13) via a guide carriage (20) and in rotation with respect to the guide carriage (20),
**characterized in that**
a first retaining bracket (23) acts on the guide carriage (20) of the respective rake rotor (16),
a second retaining bracket (24) acts on the respective rake rotor (16),
a rod (25) extends through these retaining brackets (23, 24),
a first spring (26) and a second spring (27) are guided on the respective rod (25),
the first spring (26) is arranged on a first side of the second retaining bracket (24) in a manner facing the first retaining bracket (23),
the second spring (27) is arranged on a second side of the second retaining bracket (24) in a manner facing away from the first retaining bracket (23).

2. Haymaking machine according to Claim 1, **characterized in that** the first spring (26) and the second spring (27) are each pressure springs.

3. Haymaking machine according to Claim 1 or 2, **characterized in that** the first spring (26) is supported on a first spring collar (28) facing the second retaining bracket (24) and on a second spring collar (29) facing away from the second retaining bracket (24).

4. Haymaking machine according to one of Claims 1 to 3, **characterized in that** the second spring (27) is supported on a third spring collar (30) facing the second retaining bracket (24) and on a fourth spring collar (31) facing away from the second retaining bracket (24).

5. Haymaking machine according to Claim 4, **characterized in that** the first spring (26) and the second spring (27) are able to be pretensioned via a first nut (32) and/or via a second nut (33) which cooperate with the rod (25) configured as a threaded rod.

6. Haymaking machine according to one of Claims 1 to 5, **characterized in that** a portion of the rod (25) that extends through the first retaining bracket (23) is fixed to the first retaining bracket (23).

7. Haymaking machine according to Claim 6, **characterized in that** the portion of the rod (25) that extends through the first retaining bracket (23) is fixed to the first retaining bracket (23) via nuts (34, 35) that are arranged on opposite sides of the first retaining bracket (23).

8. Haymaking machine according to one of the preceding claims, **characterized in that** the springs (26, 27) are embodied as pressure springs and/or as gas pressure springs.

9. Haymaking machine according to one of the preceding claims, **characterized in that** a shock absorber (36) is arranged parallel to the springs (26, 27, 26', 27').

## Revendications

1. Machine de fenaison (10), en particulier andaineuse rotative, comprenant
un bâti de base (11) comprenant un longeron (12) ainsi que des bras en porte-à-faux (13), lequel peut être supporté par le biais de roues de support (14) sur un sol à travailler et par le biais duquel la machine de fenaison peut être accouplée à un véhicule tracteur,
au moins une javeleuse circulaire (16) entraînée en rotation autour d'un axe de rotation, laquelle présente des bras porte-dents (17) avec des dents de javeleuse (18), la javeleuse circulaire (16) étant supportée au niveau du bras en porte-à-faux respectif (13) du bâti de base (11) de telle sorte que la javeleuse circulaire respective (16) puisse être déplacée en translation par le biais d'un chariot de guidage (20) par rapport au bras en porte-à-faux respectif (13) et en rotation par rapport au chariot de guidage (20), **caractérisée en ce qu'**un premier support de fixation (23) vient en prise au niveau du chariot de guidage (20) de la javeleuse circulaire respective (16),
qu'un deuxième support de fixation (24) vient en prise au niveau de la javeleuse circulaire respective (16), qu'une barre (25) s'étend à travers ces supports de fixation (23, 24),
qu'un premier ressort (26) et un deuxième ressort (27) sont guidés au niveau de la barre respective (25),
que le premier ressort (26) est disposé de manière tournée vers le premier support de fixation (23) au niveau d'un premier côté du deuxième support de fixation (24),
que le deuxième ressort (27) est disposé de manière détournée du premier support de fixation (23) au niveau d'un deuxième côté du deuxième support de fixation (24).

2. Machine de fenaison selon la revendication 1, **caractérisée en ce que** le premier ressort (26) et le deuxième ressort (27) sont des ressorts de compression.

3. Machine de fenaison selon la revendication 1 ou 2, **caractérisée en ce que** le premier ressort (26) s'appuie sur une première coupelle de ressort (28) tournée vers le deuxième support de fixation (24) et sur une deuxième coupelle de ressort (29) détournée du deuxième support de fixation (24).

4. Machine de fenaison selon l'une quelconque des revendications 1 à 3, **caractérisée en ce que** le deuxième ressort (27) s'appuie sur une troisième coupelle de ressort (30) tournée vers le deuxième support de fixation (24) et sur une quatrième coupelle de ressort (31) détournée du deuxième support de fixation (24).

5. Machine de fenaison selon la revendication 4, **caractérisée en ce que** le premier ressort (26) et le deuxième ressort (27) peuvent être précontraints par le biais d'un premier écrou (32) et/ou par le biais d'un deuxième écrou (33), lesquels coopèrent avec la barre (25) réalisée sous forme de broche filetée.

6. Machine de fenaison selon l'une quelconque des revendications 1 à 5, **caractérisée en ce qu**'une portion de la barre (25) qui s'étend à travers le premier support de fixation (23) est fixée au premier support de fixation (23) .

7. Machine de fenaison selon la revendication 6, **caractérisée en ce que** la portion de la barre (25) qui s'étend à travers le premier support de fixation (23) est fixée au premier support de fixation (23) par le biais d'écrous (34, 35) qui sont disposés sur des côtés opposés du premier support de fixation (23).

8. Machine de fenaison selon l'une quelconque des revendications précédentes, **caractérisée en ce que** les ressorts (26, 27) sont réalisés sous forme de ressorts de compression et/ou sous forme de ressorts de compression à gaz.

9. Machine de fenaison selon l'une quelconque des revendications précédentes, **caractérisée en ce qu**'un pare-chocs (36) est disposé parallèlement aux ressorts (26, 27, 26', 27').
